**Europäisches Patentamt**

(19) **European Patent Office**

**Office européen des brevets**

(11) Veröffentlichungsnummer: **0 004 593**
**B1**

(12) # EUROPÄISCHE PATENTSCHRIFT

(45) Veröffentlichungstag der Patentschrift:
07.10.81

(51) Int. Cl.³: **F 16 C 29/06**

(21) Anmeldenummer: **79100845.1**

(22) Anmeldetag: **21.03.79**

(54) **Kugelbüchse für Linearbewegungen.**

(30) Priorität: **04.04.78 DE 2814371**
**05.07.78 DE 2829499**

(43) Veröffentlichungstag der Anmeldung:
**17.10.79 Patentblatt 79/21**

(45) Bekanntmachung des Hinweises auf die Patenterteilung:
**07.10.81 Patentblatt 81/40**

(84) Benannte Vertragsstaaten:
**CH DE FR GB IT**

(56) Entgegenhaltungen:
**DE-B-1 167 124**
**FR-A-2 157 322**
**FR-A-2 219 329**
**US-A-4 025 128**

(73) Patentinhaber: **SKF Industrial Trading & Development Co, B.V., Postbus 50, NL-3430 AB Nieuwegein (NL)**

(72) Erfinder: **Hoffmann, Alfred, Bosuillaan 38, Bilthoven (NL)**
Erfinder: **Ullberg, Carl, Hammarsbacke 18, S-443 00 Lerum (SE)**
Erfinder: **Rekers, Hendrik, Citadeldrift 27, Nieuwegein (NL)**
Erfinder: **Ernst, Horst M., Frankenstrasse 33, D-8735 Eltingshausen (DE)**
Erfinder: **Brandenstein, Manfred, Tränkgasse 57, D-8781 Aschfeld (DE)**
Erfinder: **Olschewski, Armin, Stösselstrasse 8, D-8720 Schweinfurt (DE)**
Erfinder: **Schulz, Toni, Hindenburgstrasse 8, D-8721 Dittelbrunn (DE)**
Erfinder: **Walter, Lothar, Harald-Hamberg-Strasse 18, D-8720 Schweinfurt (DE)**

ACTORUM AG.

## Kugelbüchse für Linearbewegungen

Die Erfindung betrifft eine Kugelbüchse für Linearbewegungen, mit einem kugelbelegte ovale Führungsbahnen aufweisenden Kugelkäfig und mit einer diesen aufnehmenden Aussenhülse, die kugeltragende achsparallele Laufbahnabschnitte für die Kugeln mit je zwei radial auf- bzw. absteigenden Übergängen der Kugellaufbahn an ihren beiden Enden aufweist.

Aus der DE-B 1 916 164 ist eine Kugelbüchse dieser Art bekannt, bei der die Übergänge jedes kugeltragenden Laufbahnabschnitts zusammen mit diesem eine starre, mit der Aussenhülse einstückig verbundene Einheit bilden, d.h. jeder kugeltragende Laufbahnabschnitt ist sowohl an seinen Längsrändern als auch an seinen beiden Enden starr mit der Aussenhülse verbunden. Bei Belastung verformt sich somit jeder Laufbahnabschnitt ungleichmässig, d.h. nicht parallel zur Längsachse der Aussenhülse, wodurch im Betriebszustand mögliche Unregelmässigkeiten nicht ausgeglichen werden können. Hinzu kommt, dass die zum Tragen kommenden Kugeln auf dem aufsteigenden Übergang und die freikommenden Kugeln auf dem absteigenden Übergang einer verstärkten Rollreibung und einer zusätzlichen Gleitreibung ausgesetzt sind, welche nicht nur zum Verschleiss der Kugeln, sondern auch zum Verschleiss der Aussenhülse führen.

Ferner ist aus der US-A 4 062 602 eine Kugelbüchse bekannt, deren kugeltragende achsparallele Laufbahnabschnitte je eine kugelführende Rille aufweisen, an deren Grund sich die tragenden Kugeln schmiegen.

Hier will die Erfindung Abhilfe schaffen. Die Erfindung, wie sie in den Ansprüchen gekennzeichnet ist, löst die Aufgabe, eine Kugelbüchse der eingangs genannten Art zu schaffen, welche nicht nur eine gleichmässigere Belastung und eine geringere Reibung der Kugeln mit geringerem Verschleiss bewirkt, sondern bei präziser Funktion auch eine grössere Lebensdauer hat.

Diese Aufgabe ist erfindungsgemäss dadurch gelöst, dass jeder Übergang eine vorzugsweise quer zur Laufbahnrichtung sich erstreckende Ausnehmung aufweist, die ein eine Art Schwachstellengelenk zwischen den über die Ausnehmung hinweg verbundenen Abschnitten des Übergangs bildet.

Durch die Ausnehmung wird vorteilhaft erreicht, dass der Übergang elastisch nachgeben kann, wenn sich eine Kugel in den im Bereich des kugeltragenden Laufbahnabschnittes verengten Raums zwischen der Aussenhülse und einer die Kugelbüchse aufnehmenden Welle hineinzwängt oder aus diesem Zwischenraum herauszwängt, und dass der kugeltragende Laufbahnabschnitt der Aussenhülse durch Durchbiegung um eine Längsachse, insbesondere an seinen beiden Enden, elastisch verformbar ist, so dass die zum Tragen kommenden Kugeln reibungsarm in den verengten Zwischenraum eintreten und die vom Tragen kommenden Kugeln reibungsarm aus diesem Zwischenraum austreten.

Es ist zwar aus der DE-A 2 121 847 ein gattungsfremdes Wälzlager bekannt, bei dem, damit ein mit Wälzlagern dieser Art längsverschieblich gelagerter Werkzeugtisch während seiner Arbeitsbewegung nicht periodisch geringfügig gehoben und gesenkt wird, wenigstens ein die Kugellaufbahn tragendes Teil in seinem Ein- und Auslaufbereich elastisch nachgiebig ausgebildet ist, indem dieses Lagerteil je eine als Schlitz bezeichnete Nut aufweist und dadurch ein federndes Unterteil gebildet ist, das beim Anlauf einer Kugel nachgibt. Dieses bekannte Wälzlager lehrt jedoch nicht mehr, als zur Vermeidung der Ursache einer speziellen nachteiligen Wirkung eine in der bzw. gegen die Laufbahnrichtung offene Quernut in einem besonderen Lagerkörper vorzusehen. Davon abweichend lehrt die Erfindung, Verschleiss durch eine im wesentlichen in radialer Richtung nachgiebige Quernut in der Aussenhülse zu verhindern.

Bei einer besonderen Ausführungsform der erfindungsgemässen Kugelbüchse ist die Ausnehmung in einem gegen das Ende der Aussenhülse gerichteten Teil des Übergangs angeordnet, damit sowohl der Übergang als auch der anschliessende kugeltragende Laufbahnabschnitt so stark wie möglich federn können. Aus demselben Grunde ist es zweckmässig, wenn sich die Ausnehmung über die ganze Breite des Überganges erstreckt.

Diese Ausnehmung kann nach einem bevorzugten Ausführungsbeispiel als eine Nut ausgebildet werden, die fertigungstechnisch günstig hergestellt werden kann. Eine solche Ausführung ist z.B. dann vorteilhaft, wenn nur eine begrenzte, d.h. geringfügige Nachgiebigkeit erwünscht ist. Dabei ist es vorteilhaft, die Nut an der Aussenseite der Aussenhülse vorzusehen.

Um eine gute Elastizität des Übergangs und des an ihn anschliessenden kugeltragenden Laufbahnabschnitts zu erhalten, ist bei einer weiteren Ausführungsform die Ausnehmung als ein Schlitz ausgebildet. Vorzugsweise ist dabei die Breite des Schlitzes relativ klein im Vergleich zu dem Durchmesser der Kugeln, damit diese ungehindert den Schlitz passieren können. Zweckmässig ist es auch, wenn dabei die durch den Schlitz getrennten beiden Abschnitte des Überganges in Laufbahnrichtung annähernd tangential ineinander übergehen, denn damit wird für die Kugeln ein ungestörter stufenloser Ablaufweg erhalten.

Die bevorzugte Ausführungsform, deren kugeltragende achsparallele Laufbahnabschnitte, wie bekannt, je eine kugelführende Rille aufweisen, an deren Grund sich die tragenden Kugeln schmiegen, zeichnet sich dadurch aus, dass jeder Übergang eines tragenden Laufbahnabschnitts in seinem einstückig an die Rille angeformten, sich bis zum Schlitz erstreckenden Abschnitt eine Mulde aufweist, welche die Kugeln in paarweise einander bezüglich der Laufbahnrichtung gegenüberliegenden Punkten der beiden Schenkel
einer V-förmigen Kontaktlinie berührt, deren
Spitze an die Rille angrenzt. Diese Weiterbildung
der erfindungsgemässen Kugelbüchse hat den
besonderen Vorteil, dass die zum Tragen kommenden Kugeln infolge ihrer Zwei-Punkt-Berührung des Übergangs rasch die erzwungene Bewegungsart annehmen und infolge der V-Form
der Kontaktlinie auf die Mitte des tragenden
Laufbahnabschnitts zentriert werden.

Die radiale Steifigkeit der geprägten Laufbahnabschnitte kann bei einer besonderen Ausführungsform der erfindungsgemässen Kugelbüchse durch eine Art Bandage erhöht werden, und
zwar mittels einer in diesem Bereich angeordneten geschlitzten Hülse, deren Aussendurchmesser mit dem der Aussenhülse wegen einer im eingebauten Zustand besseren Abstützung derselben übereinstimmen sollte.

Im folgenden wird die Erfindung anhand der
durch die Zeichnung beispielhaft dargestellten,
bevorzugten Ausführungsformen der erfindungsgemässen Kugelbüchse im einzelnen erläutert.

Es zeigen:
Fig. 1 einen zur Hälfte dargestellten zentralen
Längsschnitt durch eine Kugelbüchse, bei der die
Ausnehmung als Nut ausgebildet ist,
Frig. 2 einen ab- und unterbrochen dargestellten
vergrösserten Längsschnitt durch die Aussenhülse der Kugelbüchse nach Fig. 1,
Fig. 3 einen zur Hälfte dargestellten zentralen
Längsschnitt durch ein weiteres Ausführungsbeispiel einer Kugelbüchse, bei der die Ausnehmung
als Schlitz ausgeführt ist,
Fig. 4 einen ab- und unterbrochen dargestellten
vergrösserten Längsschnitt durch die Aussenhülse der Kugelbüchse nach Fig. 3,
Fig. 5 einen Querschnitt nach der Linie V - V in
Fig. 4,

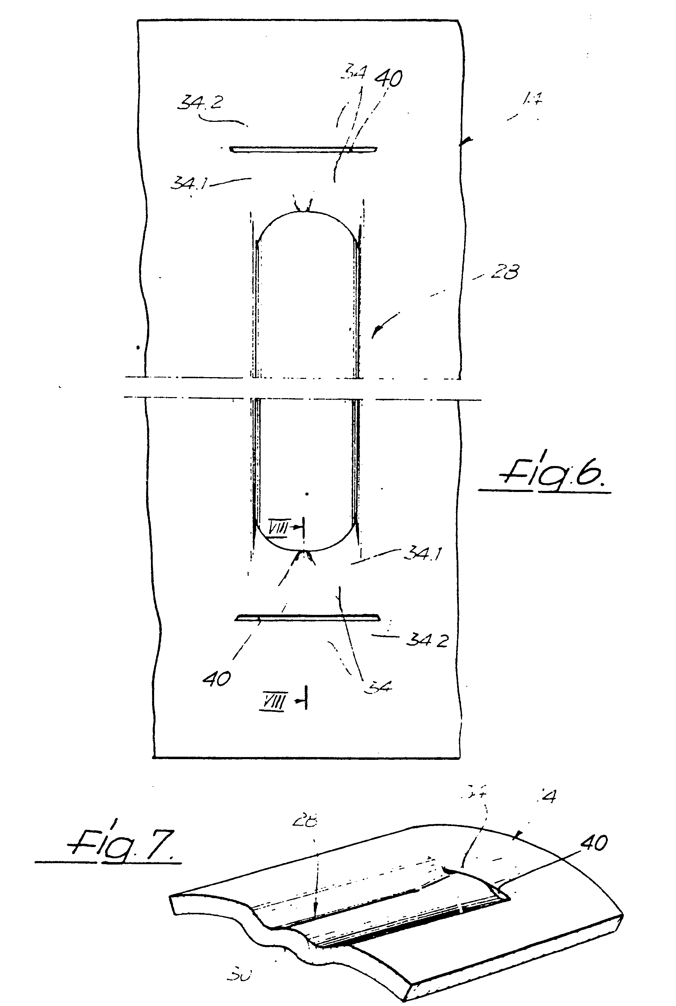

Fig. 6 eine unterbrochen dargestellte Ansicht in
Richtung des in Fig. 5 eingezeichneten Pfeiles auf
einen kugeltragenden Laufbahnabschnitt der
Aussenhülse,
Fig. 7 eine perspektivische Ansicht eines Teiles
der Aussenhülse der Kugelbüchse im Bereich
eines Laufbahnabschnitts,

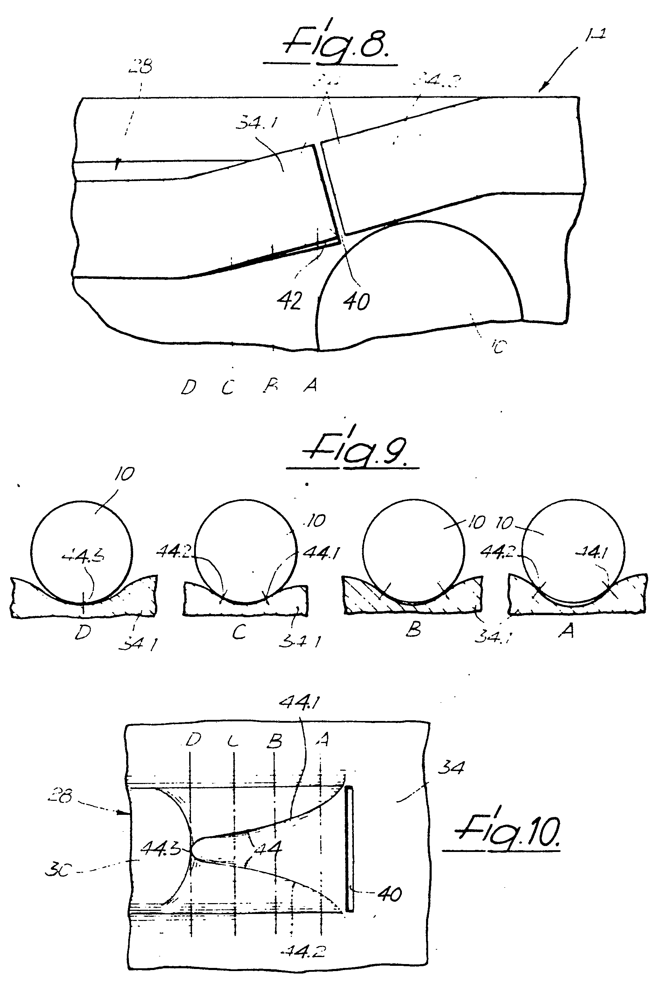

Fig. 8 einen stark vergrössert dargestellten
Schnitt nach der Linie VIII – VIII in Fig. 6 durch
einen Übergang,
Fig. 9 eine Reihe von vier schematisch je in Verbindung mit einer Kugel dargestellten Querschnitten A bis D durch eine Mulde jenes in Fig. 8
dargestellten Übergangs an den dort eingezeichneten Stellen A bis D und
Fig. 10 eine Innenansicht des Übergangs nach
Fig. 8.

Die gezeigten Kugelbüchsen werden auf einer
(nicht gezeichneten) Welle oder Stange aufgesetzt, gegenüber der eine axiale Relativverschiebung möglich ist, und bestehen im wesentlichen
aus mehreren Sätzen von aneinandergereihten
Kugeln 10, aus einem diese aufnehmenden Käfig 12 und aus einer den Käfig und die Kugeln umschliessenden Aussenhülse 14.

Der Käfig 12 ist ein kreiszylindrischer Hohlkörper, z.B. aus Kunststoffmaterial, der mehrere
gleichmässig auf den Umfang verteilte, kugelbelegte ovale Führungsbahnen 16 aufweist. Jede
Führungsbahn 16 ist in einem ungefähr C-förmigen Abschnitt mit einem radialen Durchbruch 18
versehen, dessen Breite überall kleiner ist als der
Durchmesser der Kugeln 10. Der ergänzende, ungefähr gerade Abschnitt jeder Führungsbahn 16
ist mit einer einen freitragenden Bahnkern 20 haltenden Verbindung 22 versehen, welche die Kugeln 10 radial von der Welle fernhält. Dagegen
berühren in dem C-förmigen Abschnitt jeder Führungsbahn 16 die in diesem Abschnitt befindlichen Kugeln 10 die Welle.

Die Aussenhülse 14 ist ein hohler Kreiszylinder
aus gezogenem Stahlrohr oder gewalztem Stahlblech, das präzis geformt ist. Die beiden flanschartigen Enden 24 und 26 umschliessen den Kugelkäfig 12, so dass dieser in der Aussenhülse 14
axial fixiert ist. Die lichte Weite der Enden 24 und
26 ist mindestens so gross wie der Durchmesser
der Welle. Die Aussenhülse 14 ist mit nach Zahl
und Lage den geraden Abschnitten der Führungsbahnen 16 im Käfig 12 entsprechenden, radial nach innen gedrückten Sicken 28 versehen,
die sich parallel zu den Führungsbahnen erstrekken. Jede Sicke 28 ist an ihren Enden in Form von
hohlen Kegelstümpfen ausgebildet, wobei der
Längsschnitt der Sicke trapezförmig ist. Die Sikke 28 weist mittig eine achsparallele Rille 30 auf,
die dem Sickenquerschnitt ein wellenförmiges
Profil gibt. Die Rille 30 bildet den kugeltragenden
achsparallelen Laufbahnabschnitt der zugeordneten Kugellaufbahn, welche durch die der Sicke
benachbarte Führungsbahn 16 im Käfig bestimmt
ist. Die Kugeln 10 schmiegen sich an den konkaven Grund 32 der Rille 30 an. An ihren beiden weit
voneinander entfernt liegenden Enden weist jede
Sicke 28 je einen rampenartigen Übergang 34
auf, der eine radial sanft auf- bzw. absteigende
Überleitung der Kugellaufbahn bildet. Die Steigung der Übergänge 34 ist in den Zeichnungen
zur Verdeutlichung stark übertrieben dargestellt.
Die durch den Übergang überwundene radiale
Höhendifferenz macht ungefähr 1 mm aus.

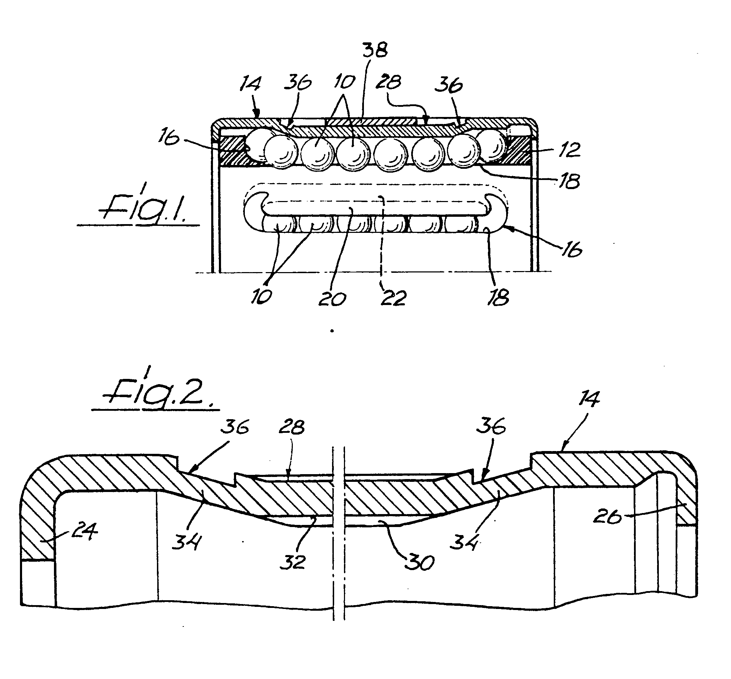

Beim Ausführungsbeispiel nach Fig. 1 und 2 ist
erfindungsgemäss jeder Übergang 34 an seiner
Aussenseite durch eine Nut 36 geschwächt, so
dass dadurch ein eine Art Schwachstellengelenk
erhalten wird, welches dem tragenden Laufbahnabschnitt 28 erlaubt, achsparallel radial zu federn. Es versteht sich von selbst, dass die in Fig. 2
dargestellte Form der Nuten 36 auch anders als
gezeigt gewählt werden kann. Beispielsweise
können die Nuten wesentlich breiter und/oder
mit einer parallel zur Längsrichtung verlaufenden
Basisfläche ausgeführt werden. Die vorgesehenen Nuten können gleichzeitig zur axialen Fixierung der Kugelbüchse in einem Gehäuse herangezogen werden, wobei beispielsweise ein
Sprengring oder dgl. in diese Nuten eingesetzt
wird. Für eine gleichmässige Belastung der tragenden Wälzkörper ist es zweckmässig, wenn der tragende Laufbahnabschnitt 28 selbst eine relativ hohe radiale Steifigkeit besitzt. Um diese zu verbessern, ist in Fig. 1 im Bereich der Laufbahnabschnitte zusätzlich eine geschlitzte Hülse 38 vorgesehen, deren Aussendurchmesser mit dem der Aussenhülse 14 übereinstimmt.

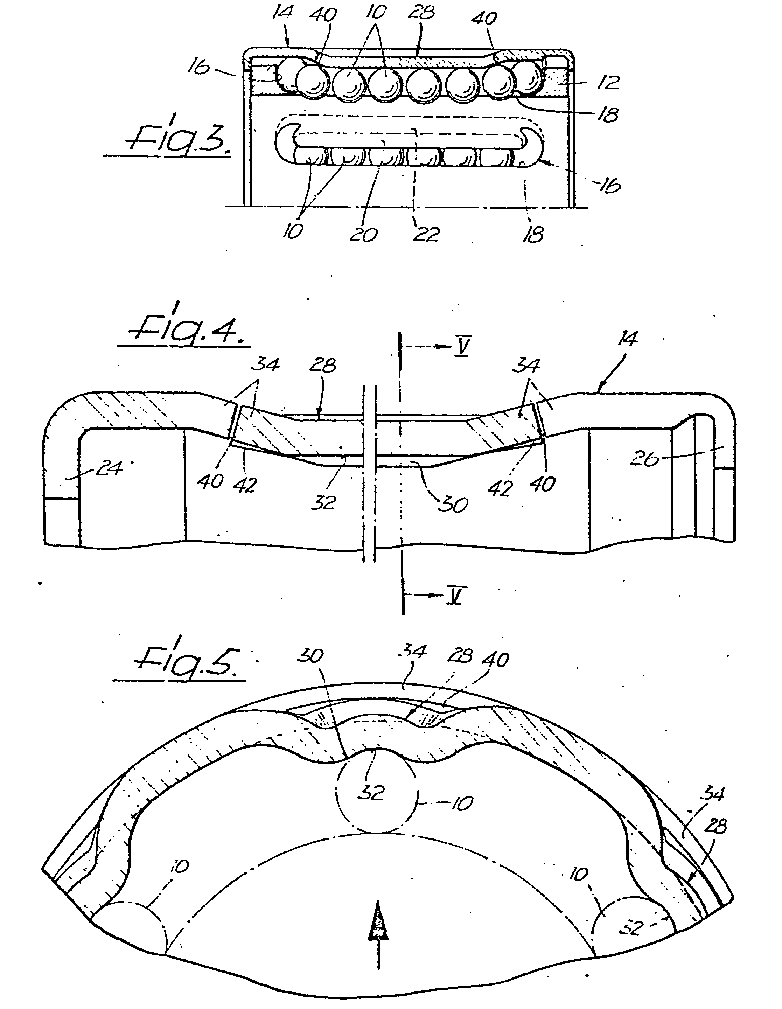

Bei dem Ausführungsbeispiel nach den Figuren 3 bis 10 ist erfindungsgemäss jeder Übergang 34 ungefähr in halber Höhe mit einem Schlitz 40 versehen, der sich über die ganze Breite des Übergangs erstreckt und eine im Vergleich zu seiner Länge geringe Breite hat. Der Schlitz 40 teilt den Übergang 34 in einen unteren Abschnitt 34.1 und einen oberen Abschnitt 34.2, die beide durch den Schlitz voneinander getrennt sind (Fig. 8). Jeder untere Abschnitt 34.1 weist eine Mulde 42 mit konkavem Grund und konvexen Rändern auf, welche die Kugeln in paarweise einander bezüglich der Laufbahnrichtung gegenüberliegenden Punkten der beiden Schenkel 44.1 und 44.2 einer V-förmigen Kontaktlinie 44 (Fig. 10) berührt, deren Spitze 44.3 auf der radialen Höhe des von der Rille 30 gebildeten Abschnittes der Kugellaufbahn liegt. Am Schlitz 40 hat die Mulde 42 ihre grösste Breite, die annähernd mit der Länge des Schlitzes übereinstimmt.

Rollt nun eine Kugel 10 von dem oberen Abschnitt 34.2 kommend den Übergang 34 hinab und über den Schlitz 40 hinweg, dann fängt die Mulde 42 die Kugel ein und zentriert sie auf die Mittellinie der Rille 30. Dabei kann sowohl der obere Abschnitt 34.2 als auch der untere Abschnitt 34.1 des Übergangs 34 sowie die Rille 30 elastisch nachgeben, d.h. der Kugel gegenüber also radial etwas ausweichen, um insbesondere deren Einführung in den verengten Raum zwischen der Sicke 28 und der Welle zu erleichtern. Durch die doppelte Berührung der Kugel 10 an den beiden Rändern der Mulde 42 wird die zunächst nicht passende Drehbewegung der Kugel den erforderlichen kinematischen Verhältnissen angepasst.

## Patentansprüche

1. Kugelbüchse für Linearbewegungen, mit einem kugelbelegte ovale Führungsbahnen (16) aufweisenden Käfig (12) und mit einer diesen aufnehmenden Aussenhülse (14), die kugeltragende achsparallele Laufbahnabschnitte (28) für die Kugeln (10) mit je zwei radial auf- bzw. absteigenden Übergängen (34) der Kugellaufbahn an ihren beiden Enden (24, 26) aufweist, dadurch gekennzeichnet, dass jeder Übergang (34) eine vorzugsweise quer zur Laufbahnrichtung sich erstreckende Ausnehmung (36, 40) aufweist, die ein eine Art Schwachstellengelenk zwischen den über die Ausnehmung hinweg verbundenen Abschnitten des Übergangs (34) bildet.

2. Kugelbüchse nach Anspruch 1, dadurch gekennzeichnet, dass die Ausnehmung (36, 40) in einem gegen das Ende der Aussenhülse (14) gerichteten Teil des Übergangs (34) angeordnet ist.

3. Kugelbüchse nach Anspruch 1 oder 2, dadurch gekennzeichnet, dass sich die Ausnehmung (36, 40) über die ganze Breite des Übergangs (34) erstreckt.

4. Kugelbüchse nach einem der Ansprüche 1 bis 3, dadurch gekennzeichnet, dass die Ausnehmung als Nut (36) ausgebildet ist.

5. Kugelbüchse nach Anspruch 4, dadurch gekennzeichnet, dass die Nut (36) an der Aussenseite der Aussenhülse (14) angebracht ist.

6. Kugelbüchse nach einem der Ansprüche 1 bis 3, dadurch gekennzeichnet, dass die Ausnehmung ein Schlitz (48) ist, der die beiden Abschnitte (34.1, 34.2) des Übergangs (34) voneinander trennt.

7. Kugelbüchse nach Anspruch 6, dadurch gekennzeichnet, dass die Breite des Schlitzes (40) relativ klein ist im Vergleich zum Durchmesser der Kugeln (10).

8. Kugelbüchse nach Anspruch 6 oder 7, dadurch gekennzeichnet, dass die durch den Schlitz (40) getrennten beiden Abschnitte (34.1, 34.2) des Übergangs (34) in Laufbahnrichtung annähernd tangential ineinander übergehen.

9. Kugelbüchse nach einem der Ansprüche 1 bis 8, deren kugeltragende achsparallele Laufbahnabschnitte je eine kugelführende Rille aufweisen, an deren Grund sich die tragenden Kugeln schmiegen, dadurch gekennzeichnet, dass jeder Übergang (34) eines tragenden Laufbahnabschnitts in seinem einstückig an die Rille (30) angeformten, sich bis zur Ausnehmung (36) bzw. zum Schlitz (40) erstreckenden Abschnitt (34.1) eine Mulde (42) aufweist, welche die Kugeln (10) in paarweise einander bezüglich der Laufbahnrichtung gegenüberliegenden Punkten der beiden Schenkel (44.1, 44.2) einer V-förmigen Kontaktlinie (44) berührt, deren Spitze (44.3) auf der radialen Höhe des von der Rille (30) gebildeten Abschnitts der Kugellaufbahn liegt.

10. Kugelbüchse nach einem der Ansprüche 1 bis 9, dadurch gekennzeichnet, dass im Bereich der nach innen vorstehenden geprägten Laufbahnabschnitte (28) als eine Art Bandage eine geschlitzte Hülse (38) vorgesehen ist.

## Claims

1. Ball bearing bushing for linear motion with a cage (12) having oval guideways (16) for the balls, accommodated in an outer sleeve (14) having at its ends (24, 26) load carrying track sections (28), parallel to the axis, for the balls (10) with two radially ascending and descending transitions (34) each, characterized in that each transition (34) is provided with a recess (36, 40) extending preferably transversally to the direction of the track, forming a kind of weak-spot coupling between the sections of the transition (34) linked up with each other across the recess.

2. Ball bearing bushing as claimed in claim 1, characterized in that the recess (36, 40) is arranged at a section of the transition (34) located toward the end of the outer sleeve (14).

3. Ball bearing bushing as claimed in claims 1 or 2, characterized in that the recess (36, 40) extends across the whole width of the transition (34).

4. Ball bearing bushing as claimed in any of the claims 1 to 3, characterized in that the recess (36, 40) is formed as a flute (36).

5. Ball bearing bushing as claimed in claim 4, characterized in that the flute (36) is arranged at the outside diameter of the outer sleeve (14).

6. Ball bearing bushing as claimed in any of the claims 1 to 3, characterized in that the recess is a slot (40) separating the two sections (34.1, 34.2) of the transition (34) from each other.

7. Ball bearing bushing as claimed in claim 6, characterized in that the width of the slot (40) is relatively small in comparison with the diameter of the balls (10).

8. Ball bearing bushing as claimed in claims 6 or 7, characterized in that the two sections (34.1, 34.2) of the transition (34) separated by the slot (40) are tangentially approximately blended in the direction of the track.

9. Ball bearing bushing as claimed in any of the claims 1 to 8, where the load carrying track sections parallel to the axis are each provided with a ball guiding groove against the bottom of which the loaded balls press themselves, characterized in that each transition (34) of a loaded track section is provided with a depression (42) in its section (34.1) forming one piece with the groove (30) and extending up to the recess (36) or slot (40), depression which is in contact with the balls (10) at points, in the direction of the track, placed in pairs opposite each other on the two sides (44.1, 44.2) of a V-shaped touching line (44) the peak (44.3) of which is at the radial height of the track section formed by the groove (30).

10. Ball bearing bushing as claimed in any of the claims 1 to 9, characterized in that a slit sleeve (38) is arranged as a kind of encirclement in the range of the embossed track sections (28) projecting toward the inside.

## Revendications

1. Douille à billes pour déplacements linéaires avec une cage (12) pourvue de chemins de guidage (16) ovales pour les billes et avec une bague extérieure (14) refermant celle-ci, la bague extérieure ayant à ses deux extrémités (24, 26) des sections de chemin (28) parallèles à l'axe supportant la charge qui présentent deux raccords (34) chacune, ascendant ou descendant, du chemin de roulement à billes, caractérisée par le fait que chaque raccord (34) présente un dégagement (36, 40) s'étendant de préférence transversalement à la direction du chemin de roulement à billes, ce dégagement formant une sorte de joint de point faible entre les parties du raccord (34) reliées à travers le dégagement.

2. Douille à billes selon la revendication 1, caractérisée par le fait que le dégagement (36, 40) est disposé dans une partie du raccord (34) située vers l'extrémité de la bague extérieure (14).

3. Douille à billes selon la revendication 1 ou 2, caractérisée par le fait que le dégagement (36, 40) s'étend sur toute la largeur du raccord (34).

4. Douille à billes selon l'une quelconque des revendications 1 à 3, caractérisée par le fait que le dégagement est conçu comme rainure (36).

5. Douille à billes selon la revendication 4, caractérisée par le fait que la rainure (36) se trouve à l'extérieur de la bague extérieure (14).

6. Douille à billes selon l'une quelconque des revendications 1 à 3, caractérisée par le fait que le dégagement est une fente (40) séparant les deux parties (34.1, 34.2) du raccord (34).

7. Douille à billes selon la revendication 6, caractérisée par le fait que la largeur de la fente (40) est relativement faible par rapport au diamètre des billes (10).

8. Douille à billes selon la revendication 6 ou 7, caractérisée par le fait que les deux parties (34.1, 34.2) du raccord (34), séparées par la fente (40), coincident à peu près tangentiellement en direction du chemin de roulement à billes.

9. Douille à billes selon l'une quelconque des revendications 1 à 8, dont les sections parallèles à l'axe supportant la charge présentent une gorge chacune, guidant les billes, les billes chargées se serrant contre le fond de la gorge, caractérisée par le fait que chaque raccord (34) d'une section de chemin chargée est pourvue d'un creux (42) dans la partie (34.1) faisant corps avec la gorge (30) et s'étendant jusqu'au dégagement (36) ou jusqu'à la fente (40), ce creux étant en contact avec les billes (10) à des points qui, par rapport à la direction du chemin de roulement à billes, se font face par paires sur les deux côtés (44.1, 44.2) d'une ligne de contact (44) en forme de V dont la pointe (44.3) se trouve à la hauteur radiale de la section du chemin de roulement à billes formée par la gorge (30).

10. Douille à billes selon l'une quelconque des revendications 1 à 9, caractérisée par le fait qu'une douille fendue (38) est disposée comme une sorte d'emmanchement dans la zone des sections de chemin (28) estampées saillant vers l'intérieur.

Fig.1.

Fig.2.

0 004 593

Fig.3.

Fig.4.

Fig.5.

9

Fig.6.

Fig.7.

0 004 593

## Fig.8.

28   34.2

34.1

11

42   40

10

D   C   B   A

## Fig.9.

10

44.3   44.2   44.1   10   10   44.2   44.1

D   34.1   C   34.1   B   34.1   A

## Fig.10.

44.1

D   C   B   A

28   34

44.3   44

30

40

44.2

13